(19) **Europäisches Patentamt**
**European Patent Office**
**Office européen des brevets**

(11) **EP 2 048 827 B1**

(12) **EUROPEAN PATENT SPECIFICATION**

(45) Date of publication and mention
of the grant of the patent:
**27.04.2011   Bulletin 2011/17**

(51) Int Cl.:
*H04L 12/46* *(2006.01)*      *H04L 1/00* *(2006.01)*

(21) Application number: **07301446.6**

(22) Date of filing: **10.10.2007**

(54) **Avoiding BER degradation in a TDM over ethernet transmission network**

Verhinderung der BER-Verschlechterung in einem TDM-über-Ethernet-Übertragungsnetzwerk

Éviter la dégradation BER dans un TDM sur un réseau de transmission ethernet

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**15.04.2009   Bulletin 2009/16**

(73) Proprietor: **Alcatel Lucent**
**75008 Paris (FR)**

(72) Inventors:
• **Gerosa, Marzio**
**20059, VIMERCATE (IT)**

• **Pellizzoni, Roberto**
**22063, CANTU (COMO) (IT)**

(74) Representative: **Shamsaei Far, Hassan**
**Alcatel Lucent**
**Intellectual Property & Standards**
**54 rue La Boétie**
**75008 Paris (FR)**

(56) References cited:
**WO-A-2005/119991     US-B1- 6 963 561**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and a system for avoiding BER (Bit Error Rate) degradation in a TDM (Time Division Multiplex) over Ethernet transmission network where TDM packets and data packets are transmitted in independent lengths of time. More specifically, the invention is applicable to the use of the so-called Circuit Emulation Service (CES) over a Packet Switched Network (PSN).

BACKGROUND OF THE INVENTION

CES is a technique that allows a PSN to emulate the characteristics of TDM circuits and therefore provide TDM based services such as T1/E1, T3/E3 leased lines. Therefore, this technique is of particular interest in relation to Ethernet transmission networks where the emulation of a TDM circuit over PSN allows for offering TDM services, for example by a service provider to a customer. Examples of such services are architectures such as PWE3 (described in IETF RFC 3985), TDM over MPLS (described in ITU-T Y.1413) or TDM across Metro Ethernet networks (MEF 8).

In a CES, when Ethernet frames are transmitted through a noisy medium, bit errors may occur. If an Ethernet frame is affected by a bit error, the error is, according to conventional methods, detected by the so-called Frame Check Sequence (FCS) and the existing protocols based on said standards cause the entire frame to be dropped. FCS is based on the use of extra check-sum characters which are added to a frame for error control purposes in data link layer protocols.

However in a CES, the effect of dropping the frames having errors becomes more problematic. This is because in a CES system, TDM-CBR data flows are emulated (CBR standing for Constant Bit Rate) and as it is generally known, the BER in an emulated TDM transmission service is higher, for example in comparison with a conventional TDM over TDM transmission process. The higher BER gives rise to a higher number of errors detected by the FCS and as a result a higher number of frames will be dropped.

In fact, each packet affected by a single error is entirely dropped causing an error burst as large as the frame itself, thus causing the dropping of the entire frame.

The relationship between the actual BER present on the physical medium which is used for transmission and the TDM-BER, namely the BER on the TDM service transported over Ethernet packets, depends on the length of the Ethernet frame itself, as contemplated in ETSI EN 301 785 V1.2.1 (2002-02). The relationship may be expressed as follow:

$$TDMBER = Frame\_Length * real\_BER$$

In the above expression, Frame Length is in fact the number of bits in the frame. Hence the actual BER (real BER in the above expression) on the service which is transported by the Ethernet frame is multiplied by a factor, the factor being the Ethernet frame length. For example, for a BER of $10^{-6}$ and a frame length of 800 bits (*i.e.* 100 Bytes), the resulting BER is $800 \times 10^{-6}$, namely $0.8 \times 10^{-3}$. It is clear that such a value which is very close to a range of BER of $10^{-3}$ is undesirable.

It is therefore desired to provide a solution for avoiding the BER degradation in a TDM over Ethernet transmission network.

WO 2005/119991 relates to a system and method, associated with a receiver, for increasing the range or bandwidth of a wireless digital communication network and a receiver incorporating the system or the method. In one embodiment, the system indudes: a service class detector configured to determine a service class of a PDU received by the receiver from the wireless digital communication network; and a frame check sequence checker coupled to the service class detector and configured to disregard error-checking information in the PDU when the service class indicates that the PDU is a streaming media PDU.

DESCRIPTION OF THE INVENTION

The above objective is achieved by means of the solution proposed by the present invention according to which the FCS which is calculated at the transmission side is ignored and a new FCS is calculated, or generated at reception side which identifies a non-faulty condition, thus avoiding the dropping of the entire frame. In this way, the multiplication effect (as described above) is not produced and an industry standard compliant circuit (as for example an Ethernet switch) will not drop the packet. As a consequence, the useful information within the packet is not lost (although the original error is still present).

Accordingly, one object of the present invention is that of providing a method for avoiding BER degradation in transporting TDM over Ethernet frames in a circuit emulation service according to claim 1.

According to another aspect of the invention, an error calculation result produced by an error calculation procedure performed at a transmission side is ignored.

According to another aspect of the invention, said error calculation result produced by an error calculation procedure performed at transmission side is eliminated before transmission.

Another object of the present invention is that of providing a transmission system adapted for transporting TDM over Ethernet frames in a circuit emulation service, according to claim 4.

According to another aspect of the invention, at least one transmitter is adapted to perform an error calculation procedure thereby producing an error calculation result with respect to a frame, and said least one receiver is adapted to ignore said error calculation result produced at said at least one transmitter.

Another object of the present invention is that of providing a receiver, for use in a transmission system for transporting TDM over Ethernet frames in a circuit emulation service, according to claim 6.

These and further features and advantages of the present invention are described in more detail in the following description as well as in the claims with the aid of the accompanying drawings.

BRIEF DESCRIPTION OF THE DRAWING

Figure 1 is a schematic representation of an exemplary sequence of steps, 1-a, 1-b and 1-c, performed on a frame according to the present invention.

Figure 2 is a schematic representation in block diagram of a transmission system for implementing the solution of the present invention.

EXAMPLES OF PREFERRED EMBODIMENTS

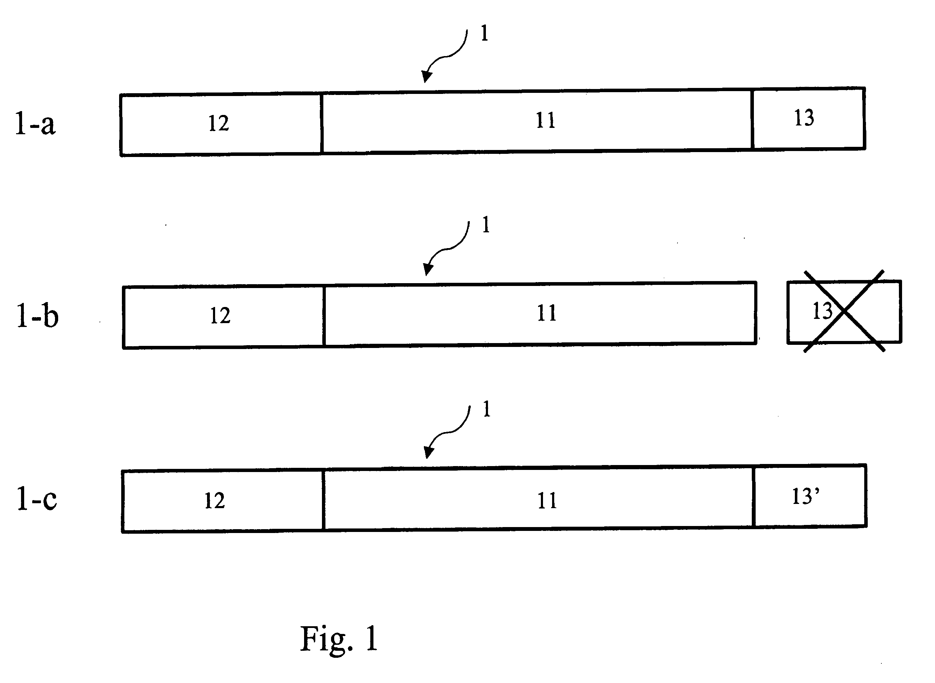

Figure 1 shows a an exemplary sequence of steps, 1-a, 1-b and 1-c, performed on a frame 1, according to the present invention. The frame 1, is of a known Ethernet type. Typically, as seen in step 1-a, such frames include a payload 11, an overhead 12 and a Frame Check Sequence, FCS, 13. In a conventional Ethernet transmission system, the FCS 13 is calculated when the Ethernet frame is generated.

According to the invention, the FCS 13 thus calculated is ignored. This is schematically shown in step 1-b. The way in which the FCS 13 is ignored may be of any convenient manner. For example it may be by means of eliminating this part of the frame before transmission. It may also be possible to eliminate the FCS at reception. However, eliminating the FCS before transmission has the additional advantage that the transmission may be performed in a more efficient manner because the number of transmitted bits is reduced and as a consequence less bandwidth is used. The frame is next transmitted to the receiving end.

At reception side, upon receiving said transmitted frame by a receiver, an error calculation procedure is triggered. The error calculation procedure is one which is preferably completely independent of the FCS which was present in the original frame (and ignored). This error calculation procedure generates a result which is an information indicative of absence of error (i.e. non-faulty condition). This non-faulty information (13') is added to the frame structure. Therefore, even if errors may in fact exist in the frame, the system is made to "believe" that no error is present in the frame and thus the standard compliant protocols which are in charge of dropping a frame in case the frame is faulty, are not triggered to drop the frame. In this manner, the frame is not lost and the BER is not degraded.

One consequence of this solution is that the error which in this manner is not detected by the error detection protocols remains in the frame. However this fact does not cause a serious drawback because there exist alternative ways in a TDM subject to CES system in order to detect the error with the advantage of avoiding the loss of the entire frame and wherein such loss could generate other additional errors on the TDM itself. These alternative ways of detecting the error are known in the art

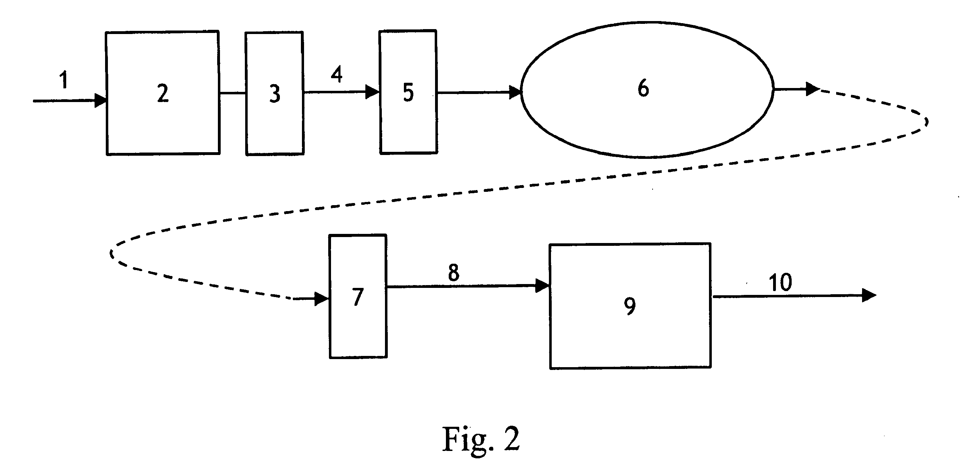

Figure 2 shows schematically a block diagram of a transmission system for implementing the solution of the present invention. For the sake of simplification, only parts and elements that are relevant for the understanding of the present description are shown.

In figure 2 there is shown a TDM-CBR data flow 1, which is input in a CES interworking function block 2 which is used as an interface for the incoming TDM data flow with the constant bit rate and where the data flow is converted into packets, in this case Ethernet packets. The CES interworking function block 2 is known in the related art. An example of a component to be used for this unit is an FPGA. The Ethernet packets generated by the CES interworking function block 2 are then input into an adaptation unit 3 where Ethernet frames are formed containing FCS information. An example of a component to be used for the adaptation unit is an FPGA. The Ethernet frames thus generated 4 are input in a physical layer transmission block 5, a known unit in the related art which relates to operation in the physical Layer or Layer 1 in the OSI Layer model. The frames are then transmitted through a transmission medium 6 to a receiver side. The transmitted packets are then received at the reception end where they are preferably first input into a physical layer reception interface 7, with similar characteristics as those mentioned in relation to physical layer transmission block 5 with the difference that it is used at the receiver side.

The Ethernet frames 8 may have errors. As already mentioned above, in a conventional receiver, the errors are detected by calculating the FCS and comparing the calculated FCS with the FCS already attached to the received frames 8.

However, according to the invention, the FCS calculated in the conventional manner is ignored. Ignoring, in this context, may be understood to mean any action which corresponds to not taking the already calculated FCS into account, including eliminating the FCS information and/or replacing it with another information.

According to the invention, a new FCS calculation is performed and the result generated is used to replace the original FCS information. This is done in an FCS calculation unit 9 which receives the Ethernet frames 8. The newly generated FCS contains non-faulty information and is added to the received frame structure 8 thus producing a different frame structure 10 with the non-faulty FCS information incorporated therein. The frame structure 10 output from the FCS calculation unit 9 is, in view of the standard compliant protocols of the units in the system, a non-faulty frame structure and therefore it is not dropped.

Examples of a component to be used for performing the FCS calculation, *i.*e. unit 9, is an FPGA or a network processor with appropriate software programs or software instructions incorporated therein.

In this manner, BER degradation is avoided in the transmission and thus the loss of entire frames is avoided.

This method can be advantageously implemented over a transmission physical layer such as a fiber/electric link in a Packet Switched Network, or on a radio link in a radio transmission network, for example digital, medium-high capacity, point-to-point microwave radio links, including means like an Application Specific Integrated Circuit (ASIC), a Field Programmable Gate Array (FPGA) and/or a microprocessor, and in a preferred embodiment through or together with a software program such as Very high speed integrated circuit Hardware Description Language (VHDL) or C programming language. Therefore, it is understood that the scope of the protection is extended to such a program and in addition to a computer readable means having a message therein, such computer readable storage means contain program code means for the implementation of one or more steps of the method, when this program is run on a computer, an ASIC, an FPGA or a microprocessor.

It is to be noted that the system or the receiver of the invention can be used to practice another and materially different method and are not be construed to be limited to practicing only the method as claimed in the present invention. Likewise, the method of the invention can be practiced by another materially different system, device, apparatus or equipment than the ones claimed in the present invention.

Further it is to be noted that the list of structures corresponding to the claimed means is not exhaustive and that one skilled in the art understands that equivalent structures can be substituted for the recited structure without departing from the scope of the invention.

**Claims**

1. A method for avoiding BER degradation in transporting TDM over Ethernet frames in a circuit emulation service, sending from a transmission side at least one frame (1) comprising a first result (13) of a first error calculation procedure **characterized in that** at a reception side a second error calculation procedure is performed on said at least one frame, said second error calculation procedure being independent of said first error calculation procedure and producing a second result (13') which is indicative of a non-faulty condition in the frame and is added to said least one frame.

2. The method of claim 1, wherein the first error calculation result produced by the first error calculation procedure is performed at a transmission side and is ignored.

3. The method of claim 2, wherein said first error calculation result produced by the first error calculation procedure performed at transmission side is eliminated before transmission.

4. A transmission system for transporting TDM over Ethernet frames in a circuit emulation service, sending from a transmission side at least one frame (1) comprising a first result (13) of a first error calculation procedure, the system comprising at least one transmitter and at least one receiver, **characterized in that** at least one receiver is adapted for performing a second error calculation procedure, said error calculation procedure being independent of said first error calculation procedure and producing a second result (13') which is indicative of a non-faulty condition in the frame and is added to said at least one frame.

5. The transmitter of claim 4, wherein at least one transmitter is adapted to perform said first error calculation thereby producing said first error calculation result with respect to a frame, and said least one receiver is adapted to ignore said first error calculation result produced at said at least one transmitter.

6. A receiver, for use in a transmission system for transporting TDM over Ethernet frames in a circuit emulation service, sending from a transmission side at least one frame (1) comprising a first result (13) of a first error calculation procedure, **characterized in that** the receiver is adapted for performing a second error calculation procedure, said error calculation procedure being independent of said first error calculation procedure and producing a second result (13) which is indicative of a non-faulty condition in the frame and is added to said at least one frame.

7. A computer program for the implementation of all method steps of any one of the claims 1 to 3, when the program is run on a computer an ASIC, an FPGA or a microprocessor.

8. Computer readable means having a message therein, such computer readable storage means contain program code means for the implementation of all method steps of any one of the claims 1 to 3, when the program is run on a computer, an ASIC, an FPGA or a microprocessor.


**Patentansprüche**

1. Verfahren zur Verhinderung der BER-Verschlechterurg während des Transports von TDM-über-Ethernet-Rahmen in einem Leitungsemulationsdienst, welcher von einer Übertragungsseite mindestens einen Rahmen (1) mit einem ersten Ergebnis (13) eines ersten Fehlerberechnungsvorgangs sendet, **dadurch gekennzeichnet, dass** auf einer Empfangsseite ein zweiter Fehlerberechnungsvorgang auf dem besagten mindestens einen Rahmen ausgeführt wird, wobei der besagte zweite Fehlerberechnungsvorgang von dem besagten ersten Fehlerberechnllngsvorgang unahhängig ist und ein zweites Ergebnis (13') erzeugt, welches einen fehlerfreien Zustand im Rahmen anzeigt und zu dem besagten mindestens einen Rahmen hinzugefügt wird.

2. Verfahren nach Anspruch 1, wobei das erste anhand des ersten Fehierberechnungsvorgangs erhaltene Fehierberechnungsergebnis auf einer Übertragungsseite ausgeführt und ignoriert wird.

3. Verfahren nach Anspruch 2, wobei das besagte von dem ersten Fehlerberechnungsvorgang erzeugte, an der Übertragungsseite ausgeführte erste Fehlerberechnungsergebnis vor der Übertragung beseitigt wird.

4. Übertragungssystem für den Transport von TDM-über-Ethernet-Rahmen in einem Leitungsemulationsdienst, welcher von einer Übertragungsseite mindestens einen Rahmen (1) mit einem ersten Ergebnis (13) eines ersten Fehlerberechnungsvorgangs sendet, wobei das System mindestens einen Sender und mindestens einen Empfänger umfasst, **dadurch gekennzeichnet, dass** mindestens ein Empfänger für das Ausführen eines zweiten Fehlerberechnungsvorgangs ausgelegt ist, wobei der besagte Fehletberechnungsvorgang von dem besagten ersten Fehlerberechnungsvorgang unabhängig ist und ein zweites Ergebnis (13') erzeugt, welches einen fehlerfreien Zustand im Rahmen anzeigt und zu dem besagten mindestens einen Rahmen hinzugefügt wind.

5. Der Sender nach Anspruch 4, wobei mindestens ein Sender für das Ausführen des besagten ersten Fehlerberechnungsvorgangs ausgelegt ist, um das besagte erste Fehlerberechnungsergebnis in Bezug auf einen Rahmen zu erzeugen, und wobei der besagte mindestens eine Empfänger dazu ausgelegt ist, das besagte an dem besagten mindestens einen Sender erzeugte erste Fehlerberechnungsergebnis zu ignorieren.

6. Empfänger für die Verwendung in einem Übertragungssystem für den Transport von TDM-über-Ethernet-Rahmen in einem Leitungsemulationsdienst, welcher von einer Übertragungsseite mindestens einen Rahmen (1) mit einem ersten Ergebnis (13) eines ersten Fehlerberechnungsvorgangs sendet, **dadurch gekennzeichnet, dass** der Empfänger für das Ausführen eines zweiten Fehlerberechnungsvorgangs ausgelegt ist. wobei der besagte Fehlerberechnungsvorgang von dem besagten ersten Fehlerberechnungsvorgang unabhängig ist und ein zweites Ergebnis (13') erzeugt, welches einen fehlerfreien Zustand im Rahmen anzeigt und zu dem besagten mindestens einen Rahmen hinzugefügt wird.

7. Computerprogramm für die Umsetzung aller Verfahrensschritte nach einem beliebigen der Ansprüche 1 bis 3, wobei das Programm auf einem Computer, einem ASIC, einem FPGA oder einem Mikroprozessor ausgeführt wird.

8. Computerlesbare Mittel mit einer darin enthaltenen Nachricht, wobei solche computerlesbare Mittel Programmcode-Mittel für die Umsetzung aller Verfahrens schritte nach einem beliebigen der Ansprüche 1 bis 3, wenn das Programm auf einem Computer, einem ASIC, einem FPGA oder einem Mikroprozessor läuft, enthalten.

## Revendications

1. Procédé pour éviter la dégradation du BER dans le transport de trames TDM sur Ethernet dans un service d'émulation de circuit émettant au moins une trame (1) depuis un côté émission, comprenant un premier résultat (13) d'une première procédure de calcul d'erreur, **caractérisé en ce qu'**une deuxième procédure de calcul d'erreur est exécutée sur ladite au moins une trame d'un côté réception, ladite deuxième procédure de calcul d'erreur étant indépendante de ladite première procédure de calcul d'erreur et produisant un deuxième résultat (13') qui indique une condition d'absence de défaut dans la trame et qui est ajouté à ladite au moins une trame.

2. Procédé selon la revendication 1, dans lequel le premier résultat de calcul d'erreur produit par la première procédure de calcul d'erreur est réalisé d'un côté émission et est ignoré.

3. Procédé selon la revendication 2, dans lequel ledit premier résultat de calcul d'erreur produit par la première procédure de calcul d'erreur réalisée du côté émission est éliminé avant l'émission,

4. Système de transmission pour transporter des trames TDM sur Ethernet dans un service d'émulation de circuit émettant au moins une trame (1) depuis un côté émission, comprenant un premier résultat (13) d'une première procédure de calcul d'erreur, le système comprenant au moins un émetteur et au moins un récepteur, **caractérisé en ce qu'**au moins un récepteur est adapté pour exécuter une deuxième procédure de calcul d'erreur, ladite procédure de calcul d'erreur étant indépendante de ladite première procédure de calcul d'erreur et produisant un deuxième résultat (13') qui indique une condition d'absence de défaut dans la trame et qui est ajouté à ladite au moins une trame.

5. Émetteur selon la revendication 4, dans lequel au moins un émetteur est adapté pour exécuter ladite première procédure de calcul d'erreur, produisant ainsi ledit premier résultat de calcul d'erreur par rapport à une trame, et ledit au moins un récepteur est adapté pour ignorer ledit premier résultat de calcul d'erreur produit sur ledit au moins un émetteur.

6. Récepteur destiné à être utilisé dans un système de transmission pour transporter des trames TDM sur Ethernet dans un service d'émulation de circuit émettant au moins une trame (1) depuis un côté émission, comprenant un premier résultat (13) d'une première procédure de calcul d'erreur, **caractérisé en ce que** le récepteur est adapté pour exécuter une deuxième procédure de calcul d'erreur, ladite procédure de calcul d'erreur étant indépendante de ladite première procédure de calcul d'erreur et produisant un deuxième résultat (13') qui indique une condition d'absence de défaut dans la trame et qui est ajouté a ladite au moins une trame.

7. Programme informatique pour mettre en oeuvre toutes les étapes du procédé selon l'une quelconque des revendications 1 à 3 lorsque le programme est exécuté sur un ordinateur, un ASIC, un FPGA ou un microprocesseur.

8. Moyens lisibles par un ordinateur contenant un message, lesdits moyens lisibles par un ordinateur contenant des moyens de code de programme pour mettre en oeuvre toutes les étapes du procédé selon l'une quelconque des revendications 1 à 3 lorsque le programme est exécuté sur un ordinateur, un ASIC, un FPGA ou un microprocesseur.

Fig. 1

Fig. 2

EP 2 048 827 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005119991 A